# EUROPEAN PATENT APPLICATION

(11) **EP 3 461 664 A1**
(43) Date of publication of application: **03.04.2019**
(21) Application number: 17193865.7
(22) Date of filing: 28.09.2017
(51) Int. Cl.: B60H 1/00

(54) **SYSTEM FOR DETERMINATION AND MANAGEMENT OF AN ENVIRONMENT INSIDE A CLOSED VEHICLE**

(71) Applicant: Vestel Elektronik Sanayi ve Ticaret A.S., 45030 Manisa (TR)
(72) Inventor: UGUZ, Mustafa Selcuk, 45030 Manisa (TR); GÜMÜS, Umut, 45030 Manisa (TR)
(74) Representative: Ascherl, Andreas

(57) **Abstract**

A system (1) for determining and managing environment inside a vehicle (2) whose compartment (3) is closed, and engine is switched off, the system (1) comprising a temperature sensor (4), an air sensor (6), and a microcontroller (8). The temperature sensor is placed inside the vehicle (2) and adapted to capture temperature inside the vehicle when the compartment (3) of the vehicle is closed and the engine of the vehicle (2) is switched off, and to generate a temperature reading (5). The air sensor (6) is placed inside the vehicle (2) and adapted to measure quality of air inside the vehicle (2) when the compartment (3) of the vehicle (2) is closed and the engine of the vehicle (2) is switched off, and to generate an air quality reading (7). The microcontroller (8) is adapted to receive the temperature reading (5) from the temperature sensor (4), to receive the air quality reading (7) from the air sensor (6), to process the temperature reading (5) and the air quality reading (7), to determine a quality (9) of an environment inside the vehicle (2) for habitable condition of a living being.

## Description

This invention refers to a system for determining and managing environment inside a vehicle whose compartment is closed, and engine is switched off according to claim 1, and a method for determining and managing environment inside a vehicle whose compartment is closed, and engine is switched off according to claim 11.

### Background of the Invention

Because of carelessness, sometimes children or pets are locked and forgotten inside a vehicle, and for that reason they unfortunately lost their lives because of suffocation. While the vehicle parking and vehicle doors and windows are locked, the air supply or air ventilation is substantially cut off by the insulation of the vehicle. If an occupant/infant/pet is trapped inside the vehicle the air quality is reduced because of continuous air consumption. Moreover, the heat inside the vehicle might also rise dramatically as time passes. However, life loss may be caused by the combination of decrease in level of oxygen, increase in levels of carbon monoxide and the heatstroke.

US Patent Publication No. US20070155300 discloses a safety device for controlling ventilation of a vehicle compartment. The safety device is mounted in a vehicle with electric windows, including a power supply connected with a motor for driving the electric window; a controlling circuit connected with the power supply; and a thermal sensor disposed in the compartment of the vehicle and connected with the controlling circuit. The thermal sensor serves to sense the temperature in the compartment and transmit signals to the controlling circuit. In the case that the temperature in the compartment reaches a certain value, the controlling circuit powers on the power supply to activate the motor for opening the window. However, by using the device of this document, the lower oxygen level cannot be taken care off. In furtherance, the opening of window increases chances of burglary of vehicle or items in the vehicle.

Chinese Patent Publication No. CN103213475 discloses an automatic ventilation device which comprises a sensor, a controller and a drive device, wherein the sensor is installed inside a car carriage and used for monitoring the concentration of oxygen or carbon monoxide inside the carriage in real time, when the oxygen concentration is smaller than a set threshold value or the carbon monoxide concentration is greater than the set threshold value, the sensor outputs a signal to the controller, the controller continuously receives the signal of the sensor within a set duration and outputs a signal to the drive device, and the drive device is used for opening a car window. When the oxygen inside the car is insufficient or the carbon monoxide is too high, the automatic ventilation device automatically ventilates or issues an alarm. By using the device of the current device, the increasing heat inside the car cannot be taken care of, and which may result in heat stroke to anyone who is mistakenly left in the car. Moreover, this device still does not solve issues of possible burglary of the car or the items inside the car. Rather, it may be risking the life of unattended living being, due to the opened window.

Chinese Patent Publication No. CN104648288 discloses a method and a device for preventing people in a vehicle from suffocation. The method comprises the following steps: opening an oxygen concentration sensor under the conditions that an engine is started and vehicle windows are closed; detecting an oxygen concentration value in the vehicle by the oxygen concentration sensor; and if a current oxygen concentration value is lower than a preset value, carrying out vehicle window opening operation and driver reminding operation. Like the previous device, this device also does not solve the problems of heat stroke inside a closed car, and burglary due to the opening of the windows.

Chinese Patent Publication No. CN104553681 discloses an automobile interior respiration monitoring system. The automobile interior respiration monitoring system comprises an oxygen sensor, an analog-digital converter, an infrared detector, a controller and an automobile window controller, wherein the output end of the oxygen sensor is connected with the input end of the analog-digital converter, the output end of the analog-digital converter is connected with the first input end of the controller, the output end of the infrared detector is connected with the second input end of the controller, and the output end of the controller is connected with the automobile window controller. The system mentioned here takes only oxygen level in consideration, and not the problems due to heat stroke. Also, functioning of window controller leads to opening of the window, which shall result in increased changes of burglary or mishaps to living being left out in the vehicle unattended.

### Object of the Invention

It is therefore an object of the present invention is to provide for a system for determination and management of an environment inside a closed vehicle, while reducing the chances for burgulary or mishaps to unattended living beings inside the closed vehicle.

### Description of the Invention

The before mentioned object is solved by a system for determining and managing environment inside a vehicle whose compartment is closed, and engine is switched off according to claim 1, and a method for determining and managing environment inside a vehicle whose compartment is closed, and engine is switched off according to claim 11.

A system for determining and managing environment inside a vehicle whose compartment is closed, and engine is switched off, the system comprises a temperature sensor, an air sensor and a microcontroller. The temperature sensor is placed inside the vehicle and adapted to capture temperature inside the vehicle when the compartment of the vehicle is closed and the engine of the vehicle is switched off, and to generate a temperature reading. The air sensor is placed inside the vehicle and adapted to measure quality of air inside the vehicle when the compartment of the vehicle is closed and the engine of the vehicle is switched off, and to generate an air quality reading. The microcontroller is adapted to receive the temperature reading from the temperature sensor, to receive the air quality reading from the air sensor, to process the temperature reading and the air quality reading, to determine a quality of an environment inside the vehicle for habitable condition of a living being.

This provides for a mechanism for optimally determining the environment inside a closed vehicle. Such determination can further be used in managing and maintaining the environment inside the vehicle to an habitable condition.

Further preferred embodiments are subject-matter of dependent claims and/or of the following specification parts.

According to a preferred embodiment of the system, the microcontroller is adapted to receive at least one of a predetermined temperature value or a predetermined air quality value, and the microcontroller is adapted to process the temperature reading, the air quality reading and at least one of the predetermined temperature value or the predetermined air quality value to determine the quality of an environment inside the vehicle for habitable condition of a living being.

This embodiment is beneficial as it provides for reference values as predetermined values which can be set by the vehicle manufacturer or the user of the vehicle, so that the microcontroller can use them for an optimized determination of the quality of the environment.

According to a further embodiment of the system, the air quality reading relates to at least one of a level of oxygen inside the compartment of the vehicle, or a level of carbon monoxide inside the compartment of the vehicle.

This embodiment is helpful, as it provides for readings specific to either of oxygen or cabon monoxide levels, or both, which are most suited parameters for determining the air quality, if it is good for a living being to survive.

According to a further preferred embodiment of the system, the system comprises a motion sensor adapted to detect presence of a living being inside the closed compartment of the vehicle, and to generate a presence data related to presence of the living being inside the closed compartment of the vehicle, wherein the microcontroller adapted to receive the presence data and to process the presence data, and based on the processing, the microcontroller is adapted to activate the air sensor and the temperature sensor.

This embodiment is beneficial as it provides for longevity of the system due to optimal usage of the air sensor and the temperature sensor which are activated only when a motion is detected within the vehicle.

According to a further preferred embodiment of the system, the system comprises an air ventilation channel for allowing circulation of air from inside of compartment of vehicle to outside of the compartment of the vehicle, and vice-versa, wherein the microcontroller is adapted to enable air circulation through the air ventilation channel based on the processing of the presence data.

This embodiment is helpful, as it provides for a mechanism to further manage the air quality inside the vehicle compartment by allowing circulation of air through air ventilation channel.

According to another embodiment of the system, the microcontroller is adapted to activate at least one of the temperature sensor, or the air sensor after enabling the air circulation through the air ventilation channel.

This embodiment is beneficial, as it provides for logetivity of the system due to optimal usage of the air sensor and the temperature sensor which are activated only when the air ventilation channel is enabled for circulation of air when the motion inside the vehicle is identified.

According to a further embodiment, the system comprises an air ventilation channel for allowing circulation of air from inside of compartment of vehicle to outside of the compartment of the vehicle, and vice-versa, wherein the microcontroller is adapted to enable air circulation through the air ventilation channel based on its determination of the quality of an environment inside the vehicle.

This embodiment is beneficial, as it provides for a mechanism for further managing the quality of air inside the compartment of the vehicle by enabling air circulation through the compartment.

According to another embodiment of the system, the air ventilation channel further comprises a closing and opening mechanism for opening and closing the air ventilation channel, and the microcontroller is adapted to activate the closing and opening mechanism to either open the air ventilation channel or closing the air ventilation channel based on its determination of the quality of an environment inside the vehicle.

The embodiment is beneficial, as it provides for a mechanism to open or close the air ventilation channel, thus allowing air access to the channel when it is required. This helps in longevity of the air ventilation channel, and also reduces maintenance for the air ventilation channel.

According to a further preferred embodiment of the invention, the system comprises a fan coupled to the air ventilation channel, and adapted to enhance rate of air circulation through the air ventilation channel when activated, wherein the microcontroller is adapted to activate the fan based on its determination of the quality of an environment inside the vehicle.

The embodiment is beneficial, as it enhances air circulation through the air ventilation, which fastens in reaching to an appropriate quality of the air inside the compartment of the vehicle.

According to another embodiment of the invention, the system comprises an air conditioner coupled to the air ventilation channel, and adapted to cool the air being circulated inside the compartment of the vehicle from outside when activated, wherein the microcontroller is adapted to activate the air conditioner based on its determination of the quality of an environment inside the vehicle.

The embodiment is beneficial, as it provides for improving the environment inside the closed compartment by maintaining an optimal temperature by using the air conditioner to either cool the air or heat the air according to a weather in which the vehicle is located.

The before mentioned object is also solved by a method for determining and managing environment inside a vehicle whose compartment is closed, and engine is switched off, according to claim 11.

The method comprises steps of:
- activating a temperature sensor placed inside the vehicle for capturing the temperature inside the vehicle when the compartment of the vehicle is closed and the engine of the vehicle is switched off, and to generate a temperature reading,
- activating an air sensor placed inside the vehicle for measuring quality of air inside the vehicle when the compartment of the vehicle is closed and the engine of the vehicle is switched off, and to generate am air quality reading;
- sending the temperature reading and the air quality reading to a microcontroller;
- processing the temperature reading and the air quality reading by the microcontroller, and determining a quality of an environment inside the vehicle for habitable condition of a living being.

According to a further preferred embodiment of the invention, the method comprises steps of:
- activating a motion sensor after the compartment of the vehicle is closed and the engine is switched off, wherein the motion sensor is adapted to detect presence of a living being inside the closed compartment of the vehicle;
- generating a presence data related to presence of the living being inside the closed compartment of the vehicle;
- receiving and processing the presence data by the microcontroller;
- activating the air sensor and the temperature sensor.

According to a further preferred embodiment of the invention, the method comprises enabling air circulation through an air ventilation channel by the microcontroller based on its determination of the quality of an environment inside the vehicle, to allow circulation of air from inside of compartment of vehicle to outside of the compartment of the vehicle, and vice-versa.

According to another embodiment of the invention, the method comprises activating a fan coupled to the air ventilation channel by the microcontroller based on its determination of the quality of an environment inside the vehicle, to enhance rate of air circulation through the air ventilation channel.

According to a further embodiment, the method comprises activating an air conditioner coupled to the air ventilation channel by the microcontroller based on its determination of the quality of an environment inside the vehicle, to cool the air being circulated inside the compartment of the vehicle from outside.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawing

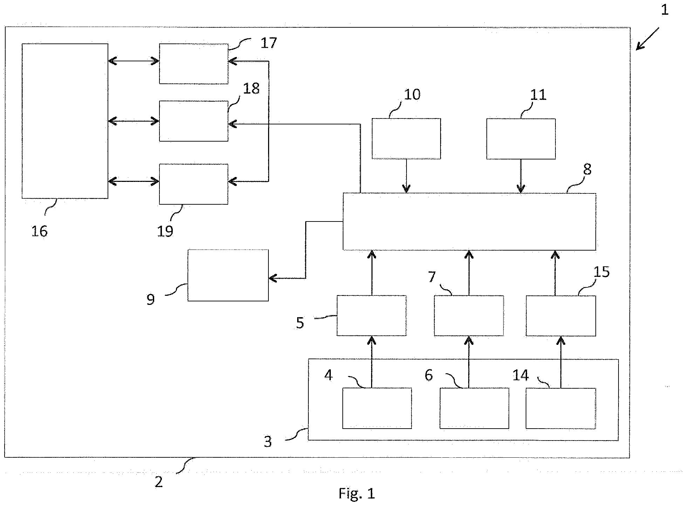

Fig. 1 illustrates a schematic diagram of a system for determining and managing environment inside a vehicle whose compartment is closed, and engine is switched off.

### Detailed Description of the Drawing

The present invention focuses on scenarios, where in a vehicle compartment a living being, probably a kid or a pet, is mistakenly left alone. In such scenario when ventilation is already closed, and even the windows of the compartment of the vehicle are closed, slowly the air quality within the compartment starts deteriorating. This deteriorating of air quality is catalyzed due to the heat inside the compartment. The deteriorating air quality leads to suffocation, and life threatening medical complication. Prolonged deterioration of the air quality may lead to also death of the living being left out inside the compartment.

The invention takes care of such scenarios by providing a safety guard for the living beings by opening an air ventilation channel. The invention also provides for sensors which detects presence of the occupant/infant/pets and check the air quality for oxygen and also temperature rise inside, and if there is an emergency situation then automatically open the air ventilation channels in order to prevent the related deaths after being trapped inside vehicles while the vehicle is parking. If necessary, an air conditioner can also automatically be switched on in order to reduce temperature that may raise over critical levels, in order to reduce the temperature to the healthy levels. For faster circulation of air through the air ventilation channel, a fan or blower coupled to the air ventilation channel can also be switched on.

This invention helps in preventing suffocation for the occupant/ infant/ pet, as making the air breathable and the temperature can be controlled at healthy levels inside the compartment of the vehicle.

Fig. 1 shows a schematic diagram of a system 1 for determining and managing environment inside a vehicle 2 whose compartment 3 is closed, and engine is switched off.

The vehicle 2 has a compartment 3 where the passenger of the vehicle 2 are generally placed. For the passenger's comfort, vehicle's compartment 3 is provided with windows. However, when the vehicle has to be parked, and to be left attended, generally the windows are also closed. Also, the windows are also closed for the passenger's comfort who do not want the gush of air while vehicle is moving. The vehicle 2 is also provided with an air ventilation channel 16, which is particularly useful when the windows of the vehicle 2 are closed and an air circulation in the closed compartment 3 is required. However, such air ventilation may have a limited rate which cannot be sufficient or comfortable for a passenger sitting in the compartment 3. Hence, to increase the rate of circulation of air flow through the air ventilation channel 16, a fan 18 or a blower is provided. When the compartment 3 is closed, it may lead to higher temperature levels inside the compartment 3, or higher or lower temperature levels can also be due to the air being ventilated in from the outside environment. To handle such temperature variations, an air conditioner 19 is provided to either cool or heat the air being ventilated inside to the compartment 3.

For determining a quality 9 of the air inside the compartment 3 of the vehicle 2, the system includes a temperature sensor 4, an air sensor 6, and a microcontroller 8.

The temperature sensor 4 is placed inside the compartment 3 of the vehicle 2, so that it can capture temperature inside the compartment 3 of the vehicle 2. The temperature sensor 4 on capturing the temperature inside the compartment 3, further generates a temperature reading 5 which is representative of a temperature level inside the compartment 3 at a particular time. It should be noted that the temperature sensor 4 need not be kept activated always, rather it needs to be activated only after the vehicle compartment 3 is closed and the engine of the vehicle 2 is switched off.

The air sensor 4 is also placed inside the compartment 3 of the vehicle 2, so that it can measure quality of air inside the compartment 3 of the vehicle 2. The temperature sensor 4 on measuring the air quality inside the compartment 3, further generates an air quality reading 7 which is representative of a temperature level inside the compartment 3 at a particular time. It should be noted that the air sensor 6 need not be kept activated always, rather it needs to be activated only after the vehicle compartment 3 is closed and the engine of the vehicle 2 is switched off.

The microcontroller 8 receives the temperature reading 5 from the temperature sensor 4 and the air quality reading 7 from the air sensor 6. The microcontroller 8 further processes the temperature reading 5 and the air quality reading 7 and determines a quality 9 of an environment inside the vehicle 2 for habitable condition of a living being. In one embodiment, for processing the temperature reading 5 and the air quality reading 7, the microcontroller 8 considers a predetermined temperature value 10 and/or a predetermined air quality value 11. The microcontroller 8 receives at least one of the predetermined temperature value 10, or the predetermined air quality value 11, and processes it along with the temperature reading 5 and the air quality reading 7 to determine the quality 9 of an environment inside the vehicle 2 for habitable condition of a living being. The microcontroller 8 need not use both the predetermined temperature value 10 and the predetermined air quality value 11, and it can just consider either of them for the processing to determine the quality 9 of an environment inside the vehicle 2 for habitable condition of a living being. When the predetermined temperature value 10 is considered for processing, it is compared with respect to the temperature reading 5 at a point of time, to determine whether the temperature inside the environment of the vehicle's compartment 3 is habitable or not. And, when the predetermined air quality value 11 is considered for processing, it is compared with respect to the air quality reading 7 at a point of time, to determine whether the air quality inside the environment of the vehicle's compartment 3 is habitable or not. It is to be noted that the temperature and air quality inside the compartment 3 of the vehicle 2 are both the parameter for denoting the quality 9 of the environment inside the vehicle 2. The predetermined values 10, 11 can be hard coded by the OEM manufacturer, or it can be soft coded and changeable at the instance of the user of the vehicle 2. In case, the predetermined values 10, 11 are changeable by the user of the vehicle 3, the OEM manufacturer provided means of input to change the predetermined values 10, 11. The predetermined values 10, 11 can be stored inside one of a memory unit communicably coupled to the microcontroller 8.

The air quality reading 7 relates to at least one of a level of oxygen 12 inside the compartment 3 of the vehicle 2, or a level of carbon monoxide 13 inside the compartment 3 of the vehicle 2. It is to be noted that the deficiency of oxygen relates to breathing difficulties for a living being, while carbon monoxide inhaling relates to toxicity. Monitoring both the factors provides with most appropriate assessment of the air quality inside the compartment 3. However, either of the oxygen level or the carbon monoxide level can be used to determine air quality inside the compartment 3. The oxygen level determination can be important when the windows of the vehicles are closed for long and there is no fresh supply of oxygen. The significance of carbon monoxide is when the air ventilation channel 16 is opened, however the circulation of the air is not well, and carbon monoxide enters into the compartment and gets concentrated.

The system 1 also has motion sensor 14 which detects presence of the living being inside the closed compartment 3 of the vehicle 2, and generates a presence data 15 related to presence of the living being inside the closed compartment 3 of the vehicle 2. The microcontroller 8 receives the presence data 15 and processes the presence data 15, and based on the processing, activates the air sensor 6 and the temperature sensor 4. The activation of both the sensors 4, 6 can be made in parallel, or sequential fashion. The sequential fashion activation of the sensors 4, 6 can again be based on certain conditions, like after activating air sensor, the temperature sensor is to be activated after few minutes, or vice versa. Another such condition for sequential activation of sensors 4, 6 can be based on temperature readings 5, or the air quality reading 7, and comparison of these readings with certain predefined data. When sequential activation occurs, either of the sensors 4, 6 can be activated firstly.

In one embodiment, the motion sensor 14 is not provided, rather the temperature sensor 4, and the air sensor 6 are activated directly without any element like motion sensor, i.e., the sensors 4, 6 are activated as soon the windows are closed, and the engine is switched off of the vehicle 2.

For management of the quality of environment inside the compartment 3 of the vehicle 2, the microcontroller 8 enables air circulation through the air ventilation channel 16 based on its determination of the quality 9 of an environment inside the vehicle 2. To enable or disable air circulation from the air circulation channel 16, the air circulation channel is provided with a closing and opening mechanism 17. The microcontroller 8 activates the closing and opening mechanism 17 to either open the air ventilation channel 16 or closing the air ventilation channel 16 based on its determination of the quality 9 of an environment inside the vehicle 2. In one embodiment, the closing and opening mechanism 17 is not provided, rather the air ventilation channel 16 are always opened for keeping the circulation of the air through the air circulation channel 16.

For further enhancing the air circulation or effectively enabling the circulation of air when the circulation of air is not proper when the air circulation channel 16 are opened, the air circulation channel 16 are coupled to a fan which enhances rate of air circulation, or effectuates proper air circulation through the air ventilation channel 16. The microcontroller 8 activates the fan 18 based on determination of the quality 9 of the environment inside the vehicle 2. In one embodiment, for activating the fan 18, the microcontroller 8 can keep on determining the quality 9 of the environment inside the vehicle, and if the quality 9 of the environment is not getting better in a particular time frame, the microcontroller 8 than activates the fan 18, so that the quality 9 of the environment inside the compartment 3 can be further improved. In one embodiment, the fan 18 is not provided, rather the air circulation is only managed through opening and closing of the air circulation channel 16 through the closing and opening mechanism 17.

As it is noted that the temperature is important element for the quality of habitable environment inside the compartment 3. If the temperature level is not in order of the habitable condition inside the compartment 3 of the vehicle 2, the microcontroller 8 activates the air conditioner 19 based on the determination of the quality 9 of an environment inside the vehicle 2. Once activated, the air conditioner 19 which is coupled to the air ventilation channel 16, cool the air being circulated inside the compartment 3 of the vehicle 2 from outside. The air conditioner 19 can only be switched on by the microcontroller 8 based on regular monitoring of the quality of the environment by the microcontroller 8, and can be switched off when the quality of the environment improves. Also, in spite of monitoring by the microcontroller 8, the air conditioner 19 can be switched off at a particular time interval, and can again be switched on when the quality 9 of the environment inside the vehicle 2 deteriorate. In one embodiment, the microcontroller 8 do not regulates the air conditioner 19, and it is not part of the system 1.

In one embodiment of the invention, management of the quality of environment is not carried out by the system 1, rather once the quality 9 of the environment is determined, an alarm can be raised, so that either the windows can be broke open, or the owner of the vehicle 2 is intimated of such emergency situation. The alarm can be placed outside the vehicle, so that it's raising can intimate the people around the surrounding of the vehicle 2 to take an action for saving the living being inside the vehicle. In another embodiment, the alarm also can be raised to an emergency service who can timely come and take care of such situation. For intimating to the emergency services, the details of the vehicle, and location of the vehicle can be sent using a computer or cellular network. Similarly, the owner of the vehicle 2 can also be intimated through the computer or cellular network. The intimation to the owner of the vehicle 2 can be made through a sound device which can be part of the ignition key of the engine, or raising a sound onto the mobile device being carried by the owner of the vehicle, or through a message delivered for such emergency scenario through a SMS, or a mobile application installed onto the owner's mobile device. Also, the management of the air quality can also be done by any other mechanism which is not part of the system 1 of this invention.

In another embodiment, for management of the quality of the environment inside the compartment 3 of the vehicle 2, the microcontroller 8 detects presence of a living being inside the compartment 3 of the vehicle 2, on detection enables circulation of air through the air ventilation channel 16, so that the fresh air can be transmitted inside the compartment 3, and the stale air can be exited out of the compartment 3. Once the air ventilator channel 16 is opened, the microcontroller 8 can activate the sensors 4, 6. In one embodiment, the sensors 4, 6 are already activated when the presence of the living being is detected, just after the compartment is closed, and engine is switched off and they need not wait for activation for the presence of living being to be detected.

It is to be noted that in one embodiment, the quality 9 of the environment inside the compartment 3 of the vehicle 2 is regularly monitored using the sensors 4, 6, and once it is identified the microcontroller 8 that the quality 9 of the air is appropriate inside the compartment 3 of the vehicle 2, it deactivates the sensors 4, 6. And, once again the microcontroller 8 determines that the quality 9 inside the compartment 3 of the vehicle 2 is inappropriate for habitation of a living being, it again activates the sensors 4, 6.

The motion sensor 14 is activated when the engine is switched off and the windows are closed, and is deactivated when either the window is opened, or the engine is switched on, or, both. In one embodiment, the motion sensor 14 need not be remain activated for a complete period of the switching off the engine, and the closing of window, to the switching on of the engine and/or, opening of the window, rather the motion sensor 14 can be intermittently activates or deactivates at a pre-defined interval of time to save the power, and to increase longevity of the motion sensors.

Please note that here closing and opening of the windows, also means closing and opening of the doors too, onto which the windows are provided.

The invention has application in any kind of vehicle which has passenger compartment.

Thus, the present invention provides for a system 1 for determining and managing environment inside a vehicle 2 whose compartment 3 is closed, and engine is switched off. The system 1 includes a temperature sensor 4, an air sensor 6, and a microcontroller 8. The temperature sensor 4 is placed inside the compartment 3 of the vehicle 2 and captures temperature inside the compartment 3 when the compartment 3 of the vehicle 2 is closed and the engine of the vehicle 2 is switched off, and generates a temperature reading 5. The air sensor 6 is placed inside the compartment 3 of the vehicle 2 and measures quality of air inside the compartment 3 when the compartment 3 of the vehicle 2 is closed and the engine of the vehicle 2 is switched off, and generates an air quality reading 7. The microcontroller 8 receives the temperature reading 5 from the temperature sensor 4, receives the air quality reading 7 from the air sensor 6, processes the temperature reading 5 and the air quality reading 7, determines a quality 9 of an environment inside the vehicle 2 for habitable condition of a living being.

### List of reference numbers

- 1: system
- 2: vehicle
- 3: compartment of vehicle
- 4: temperature sensor
- 5: temperature reading
- 6: air sensor
- 7: air quality reading
- 8: microcontroller
- 9: quality of an environment inside the vehicle
- 10: predetermined temperature value
- 11: predetermined air quality value
- 12: level of oxygen
- 13: level of carbon monoxide
- 14: motion sensor
- 15: presence data
- 16: air ventilation channel
- 17: closing and opening mechanism
- 18: fan
- 19: air conditioner

## Claims

1. A system (1) for determining and managing environment inside a vehicle (2) whose compartment (3) is closed, and engine of the vehicle (2) is switched off, the system (1) comprising:
- a temperature sensor (4) placed inside the vehicle (2) and adapted to capture temperature inside the vehicle when the compartment (3) of the vehicle is closed and the engine of the vehicle (2) is switched off, and to generate a temperature reading (5);
- an air sensor (6) placed inside the vehicle (2) and adapted to measure quality of air inside the vehicle (2) when the compartment (3) of the vehicle (2) is closed and the engine of the vehicle (2) is switched off, and to generate an air quality reading (7);
- a microcontroller (8) adapted to receive the temperature reading (5) from the temperature sensor (4), to receive the air quality reading (7) from the air sensor (6), to process the temperature reading (5) and the air quality reading (7), to determine a quality (9) of an environment inside the vehicle (2) for habitable condition of a living being.

2. The system (1) according to the claim 1, wherein the microcontroller (8) is adapted to receive at least one of a predetermined temperature value (10) or a predetermined air quality value (11), and the microcontroller (8) is adapted to process the temperature reading (5), the air quality reading (7) and at least one of the predetermined temperature value (10) or the predetermined air quality value (11) to determine the quality (9) of the environment inside the vehicle (2) for habitable condition of a living being.

3. The system (1) according the any of the claims 1 or 2, wherein the air quality reading (7) relates to at least one of a level of oxygen (12) inside the compartment (3) of the vehicle (2), or a level of carbon monoxide (13) inside the compartment (3) of the vehicle (2).

4. The system (1) according to any of the claims 1 to 3 comprising:
- a motion sensor (14) adapted to detect presence of a living being inside the closed compartment (3) of the vehicle (2), and to generate a presence data (15) related to presence of the living being inside the closed compartment (3) of the vehicle (2),
wherein the microcontroller (8) is adapted to receive the presence data (15) and to process the presence data (15), and based on the processing, the microcontroller is adapted to activate the air sensor (6) and the temperature sensor (4).

5. The system (1) according to the claim 4 comprising:
- an air ventilation channel (16) for allowing circulation of air from inside of compartment (3) of vehicle (2) to outside of the compartment (3) of the vehicle (2), and vice-versa,
wherein the microcontroller (8) is adapted to enable air circulation through the air ventilation channel (16) based on the processing of the presence data (15).

6. The system (1) according to the claim 5, wherein the microcontroller (8) is adapted to activate at least one of the temperature sensor (4), or the air sensor (6) after enabling the air circulation through the air ventilation channel (16).

7. The system (1) according to any of the claims 1 to 4 comprising:
- an air ventilation channel (16) for allowing circulation of air from inside of compartment (3) of vehicle (2) to outside of the compartment (3) of the vehicle (2), and vice-versa,
wherein the microcontroller (8) is adapted to enable air circulation through the air ventilation channel (16) based on its determination of the quality (9) of an environment inside the vehicle (2).

8. The system (1) according to claim 7, wherein the air ventilation channel (16) further comprises a closing and opening mechanism (17) for opening and closing the air ventilation channel (16), and the microcontroller (8) is adapted to activate the closing and opening mechanism (17) to either open the air ventilation channel (16) or closing the air ventilation channel (16) based on its determination of the quality (9) of an environment inside the vehicle (2).

9. The system (1) according to any of the claims 7 or 8 comprising:
- a fan (18) coupled to the air ventilation channel (16), and adapted to enhance rate of air circulation through the air ventilation channel (16) when activated,
wherein the microcontroller (8) is adapted to activate the fan (18) based on its determination of the quality (9) of the environment inside the vehicle (2).

10. The system (1) according to any of the claims 7 to 9 comprising:
- an air conditioner (19) coupled to the air ventilation channel (16), and adapted to cool the air being circulated inside the compartment (3) of the vehicle (2) from outside when activated,
wherein the microcontroller (8) is adapted to activate the air conditioner (19) based on its determination of the quality (9) of an environment inside the vehicle (2).

11. A method for determining and managing environment inside a vehicle (2) whose compartment (3) is closed, and engine is switched off, the method comprises:
- activating a temperature sensor (4) placed inside the vehicle (2) for capturing a temperature inside the vehicle (2) when the compartment (3) of the vehicle (2) is closed and the engine of the vehicle (2) is switched off, and to generate a temperature reading (5);
- activating an air sensor (6) placed inside the vehicle (2) for measuring quality of air inside the vehicle (2) when the compartment (3) of the vehicle (2) is closed and the engine of the vehicle (2) is switched off, and to generate am air quality reading (7);
- sending the temperature reading (5) and the air quality reading (7) to a microcontroller (8);
- processing the temperature reading (5) and the air quality reading (7) by the microcontroller (8), and determining a quality (9) of an environment inside the vehicle (2) for habitable condition of a living being.

12. The method according to the claim 11 comprises:
- activating a motion sensor (14) after the compartment (3) of the vehicle (2) is closed and the engine is switched off, wherein the motion sensor (14) is adapted to detect presence of a living being inside the closed compartment (3) of the vehicle (2);
- generating a presence data (15) related to presence of the living being inside the closed compartment (3) of the vehicle (2);
- receiving and processing the presence data (15) by the microcontroller (8);
- activating the air sensor (6) and the temperature sensor (4).

13. The method according to any of the claims 11 or 12 comprises:
- enabling air circulation through an air ventilation channel (16) by the microcontroller (8) based on its determination of the quality (9) of an environment inside the vehicle (2), to allow circulation of air from inside of compartment (3) of vehicle (2) to outside of the compartment (3) of the vehicle (2), and vice-versa.

14. The method according to the claim 13 comprises:
- activating a fan (18) coupled to the air ventilation channel (16) by the microcontroller (8), based on its determination of the quality (9) of an environment inside the vehicle (2), to enhance rate of air circulation through the air ventilation channel (16).

15. The method according to any of the claims 13 or 14 comprises:
- activating an air conditioner (19) coupled to the air ventilation channel (16) by the microcontroller (8) based on its determination of the quality (9) of an environment inside the vehicle (2), to cool the air being circulated inside the compartment (3) of the vehicle (2) from outside.
